# DEMANDE DE BREVET EUROPEEN

(11) **EP 0 643 282 A1**
(43) Date de publication de la demande: **15.03.1995**
(21) Numéro de dépôt: 94402043.7
(22) Date de dépôt: 13.09.1994
(51) Int. Cl.: G01B 9/06, G01B 11/27

(54) **Dispositif optique de mesure d'écart transversal**

(30) Priorité: 13.09.1993 FR 9310856
(71) Demandeur: SFIM OPTRONIQUE POUR LA DEFENSE ET LE SPATIAL, F-78146 Vélizy-Villacoublay (FR)
(72) Inventeur: Thebault, Jacques, F-78320 Le Mesnil Saint Denis (FR)
(74) Mandataire: Fort, Jacques

(57) **Abrégé**

Le dispositif optique permet de mesurer l'écart transversal, par rapport à un axe optique, d'un objet (10) déplaçable le long de l'axe sur une longueur supérieure de plusieurs ordres de grandeur à la dimension transversale maximale acceptable pour la pupille du dispositif. Il comprend, un motif lumineux placé sur l'objet et, dans cet ordre, le long de l'axe optique, un système dioptrique afocal fixe (22) de grandissement axial inférieur à 1/10, un viseur optique (24) de longueur focale fixe, déplaçable le long de l'axe optique, destiné à pointer l'image fournie par le système afocal, ayant un grandissement supérieur à l'unité et un détecteur matriciel (20) fixe par rapport à l'optique du viseur. Des moyens (28) permettent de déterminaer le barycentre de l'image formée sur le détecteur et l'écart de ce barycentre par rapport à l'axe optique.

## Description

La présente invention a pour objet un dispositif de mesure de l'écart transversal, par rapport à un axe, d'un objet déplaçable le long de l'axe sur une longueur importante. Plus précisément l'invention a pour objet un dispositif de mesure optique, donc utilisable même lorsque l'environnement de l'objet rend impossible la mise en place de moyens mécaniques ou électriques sur l'objet lui-même et/ou lorsqu'il existe des limitations sévères sur l'ajout de volume ou de poids apporté à l'objet par le dispositif de mesure.

Les procédés optiques habituels perdent beaucoup de leur précision lorsque la mesure doit être faite à une distance supérieure de plusieurs ordres de grandeur à la pupille maximale admissible pour l'optique. Un exemple représentatif -mais non-limitatif- d'une telle situation est la mesure de l'écart transversal, par rapport à l'axe d'un tube de petit diamètre, de la position d'un objet susceptible de se déplacer sur une grande longueur le long du tube. Par exemple un théodolite de haute précision, pour permettre de mesurer un écart de 60 µm à 12 mètres, exige un diamètre de pupille supérieur à 30mm. L'utilisation d'un faisceau laser éclairant depuis l'extérieur une cible (capteur matriciel ou paquet de fibres optiques de transmission à un capteur) porté par l'objet est mal adapté pour arriver à une précision satisfaisante, du fait du diamètre élevé de la tache d'éclairement.

La présente invention vise notamment à fournir un dispositif de mesure optique répondant mieux que ceux antérieurement connus aux exigences de la pratique, dans les conditions exposées plus haut. L'invention vise plus particulièrement à fournir un dispositif de mesure permettant d'arriver à une précision élevée même avec une pupille faible et n'ayant qu'un encombrement longitudinal relativement réduit.

Dans ce but l'invention propose notamment un dispositif optique de mesure de l'écart transversal, par rapport à un axe optique, d'un objet déplaçable le long de l'axe sur une longueur supérieure de plusieurs ordres de grandeur à la dimension transversale maximale acceptable pour la pupille du dispositif, caractérisé en ce qu'il comprend : un motif lumineux placé sur l'objet et, dans cet ordre, le long de l'axe optique, un système dioptrique afocal fixe de grandissement axial inférieur à 1/10, un viseur optique de longueur focale fixe, déplaçable le long de l'axe optique, destiné à pointer l'image fournie par le système afocal, ayant un grandissement supérieur à l'unité, un détecteur matriciel fixe par rapport à l'optique du viseur, et des moyens de détermination du barycentre de l'image formée sur le détecteur et de l'écart de ce barycentre par rapport à l'axe optique.

Le motif lumineux peut être constitué de diverses façons, par exemple par une mire éclairée depuis l'extérieur, par un point lumineux, par un anneau lumineux, par un réticule noir sur fond clair ou inversement. Le viseur optique a avantageusement un grandissement transversal inverse du grandissement transversal du système dioptrique afocal, de façon que les déplacements de l'image du barycentre soient égaux aux déplacements de l'objet par rapport à l'axe.

Si par exemple le système afocal a un grandissement axial de 1/100, une étendue de déplacement axial du viseur de 12cm suffira pour autoriser des mesures d'écart sur un objet dont l'étendue de déplacement axial possible atteint 12m. Le grandissement radial du système afocal sera alors de 1/10 et on pourra utiliser, pour reprendre l'image formée par le système afocal et former l'image définitive sur le détecteur matriciel, un objectif de microscope ayant un grandissement de 10 seulement.

Lorsque l'amplitude de l'écart ne dépasse pas quelques millimètres, on pourra utiliser, comme détecteur matriciel, une caméra CCD, avec un grandissement global du dispositif optique égal à l'unité.

Le motif lumineux est éclairé par des moyens qui tiennent compte de l'environnement de l'objet. Souvent, un éclairage par lumière diffusée sera insuffisant. Dans certains cas, on pourra constituer le motif par un simple trou éclairé depuis une source extérieure par une fibre optique. Mais cette solution oblige, si l'objet est susceptible de tourner autour d'un axe orthogonal à l'axe optique, à constituer un lobe d'émission large, gênant si des réflexions multiples sur la paroi d'un tube sont à craindre. Une solution souvent avantageuse consiste à envoyer un faisceau d'éclairage à l'aide du dispositif lui-même, en rendant l'objet réfléchissant dans la direction du faisceau d'éclairage incident, grâce à un montage catadioptre.

L'invention sera mieux comprise à la lecture de la description qui suit d'un mode particulier de réalisation, donné à titre d'exemple non-limitatif. La description se réfère aux dessins qui l'accompagnent, dans lesquels :
- la figure 1 montre un exemple d'installation comportant un tube et un objet déplaçable le long du tube et dont la position transversale est à mesurer à distance, depuis l'extérieur du tube;
- la figure 2 est un schéma optique d'un dispositif utilisable dans l'installation de la figure 1 ; et
- la figure 3 est un schéma montrant une constitution possible de motif lumineux utilisable dans le dispositif de la figure 2.

Le dispositif qui sera maintenant décrit à titre d'exemple est destiné à la mesure de l'écart d'un objet 10 par rapport à l'axe d'un tube 12 de petit diamètre dans lequel l'objet est déplaçable longitudinalement par un mécanisme 14 extérieur au tube. L'existence d'un environnement particulier peut obliger à utiliser une méthode optique pour mesurer cet écart. Ce cas est par exemple celui d'un objet constitué par une bobine de mesure d'un flux magnétique intense (plusieurs Teslas) qui règne dans un tube 12 de quelques centimètres de diamètre interne et de plusieurs mètres de long, dans lequel la bobine est déplaçable sur une distance D. Le tube, poli intérieurement, peut être séparé, par des couches de super-isolation, de bobines 16 supra-conductrices maintenues à très basse température. L'objet, constitué par un détecteur magnétique à plusieurs bobines, est fixé à l'extrémité d'une perche 18 entraîné par le mécanisme 14.

La précision recherchée pour la mesure de l'écart du détecteur 10 par rapport à l'axe doit dans ce cas être obtenue avec un dispositif dont le système dioptrique présente une pupille compatible avec le diamètre interne du tube 12, inférieur de plusieurs ordres de grandeur à la longueur D, et inférieur à l'écartement maximum qui peut exister entre l'objet et le système dioptrique du dispositif. Par ailleurs le système optique doit être compatible avec la réflectivité du tube provoquée par le polissage interne qui sera souvent nécessaire. Enfin, le système optique doit pouvoir tolérer, dans beaucoup de cas, une inclinaison de l'objet par rapport à son orientation nominale.

Pour atteindre ces résultats, le dispositif suivant l'invention comporte un système optique de formation d'images de constitution particulière et un détecteur matriciel 20, pouvant être constitué par une caméra CCD de type disponible à l'heure actuelle, sur laquelle le système forme l'image d'un motif lumineux (point source en général) placé sur le détecteur magnétique, avantageusement suivant l'axe de ce dernier.

Le système optique comporte deux ensembles optiques montés sur un socle mécanique rigide, ayant un coefficient de dilatation thermique très faible, par exemple en granit ou en verre dit "zérodur". Le premier ensemble 22 est fixe sur le socle et il a pour fonction de donner une image réelle et physiquement accessible du motif lumineux, avec un grandissement transverse, et surtout un grandissement longitudinal, fixes et inférieurs à l'unité. Cet ensemble 22 sera généralement constitué par un afocal, qui peut se limiter à deux lentilles, ayant un grandissement axial de l'ordre de 1/100 dans le cas d'une distance D dépassant la dizaine de mètres. Avec par exemple un grandissement axial de 1/100, l'image du motif lumineux ne se déplace longitudinalement que de 120mm en sortie de l'ensemble 22 lorsque la distance de l'objet par rapport à la lentille frontale de l'ensemble 22 varie entre 1 et 13m. Le grandissement transverse étant la racine carrée du grandissement axial, il sera de 1/10, quelle que soit la distance du motif, si le grandissement axial de l'afocal est de 1/100.

Le second ensemble 24 incorpore le détecteur matriciel 20 et constitue un viseur à distance finie, ayant un grandissement optique supérieur à l'unité et une focale courte. Ce viseur peut notamment être constitué par un objectif de microscope. L'ensemble 24 peut être extrêmement compact et il suffit qu'il soit déplaçable le long de l'axe d'une distance égale à D divisée par le grandissement axial de l'ensemble 22. L'ensemble 24 est, pour chaque position de l'objet 10, ajusté de façon à mettre au point le viseur sur l'image réelle fournie par l'ensemble 22. Le réglage peut être rapide.

La pupille définie par un diaphragme 26 doit être telle que son image formée à l'entrée du tube 12 ne dépasse pas le diamètre interne de ce tube. En dépit de cette condition, il est possible d'arriver à une précision élevée. Par exemple, la tache de diffraction, pour une longueur d'onde située dans le domaine visible, d'un point source constituant le motif, observé à 13m à travers une pupille de 30mm, est d'environ 0,6mm. Il est possible de pointer une telle tache de diffraction, formée sur le détecteur 20, à 30 µm près avec une sensibilité de l'ordre du 20ème de son diamètre, ce que l'on sait faire par analyse de l'image à l'aide de circuits ou calculateurs de traitement 28 de type connu, qui déterminent le barycentre de la tache. Des logiciels d'analyse utilisables dans ce but sont disponibles.

Diverses solutions sont utilisables pour fournir un motif éclairé, lorsque la lumière diffusée dans le tube fournit un niveau d'éclairement insuffisant.

Une première solution consiste à amener de l'énergie lumineuse jusqu'à l'objet depuis une source extérieure par une fibre optique dont la face de sortie est solidarisée de l'objet 10. Mais cette solution présente des inconvénients lorsque l'inclinaison de l'objet est susceptible de varier. Le lobe lumineux doit être surdimensionné pour que l'énergie lumineuse sorte à coup sûr à une extrémité du tube lorsque l'objet est à l'autre extrémité. Un tel lobe large génère des réflexions parasites néfastes sur la paroi interne polie du tube 12.

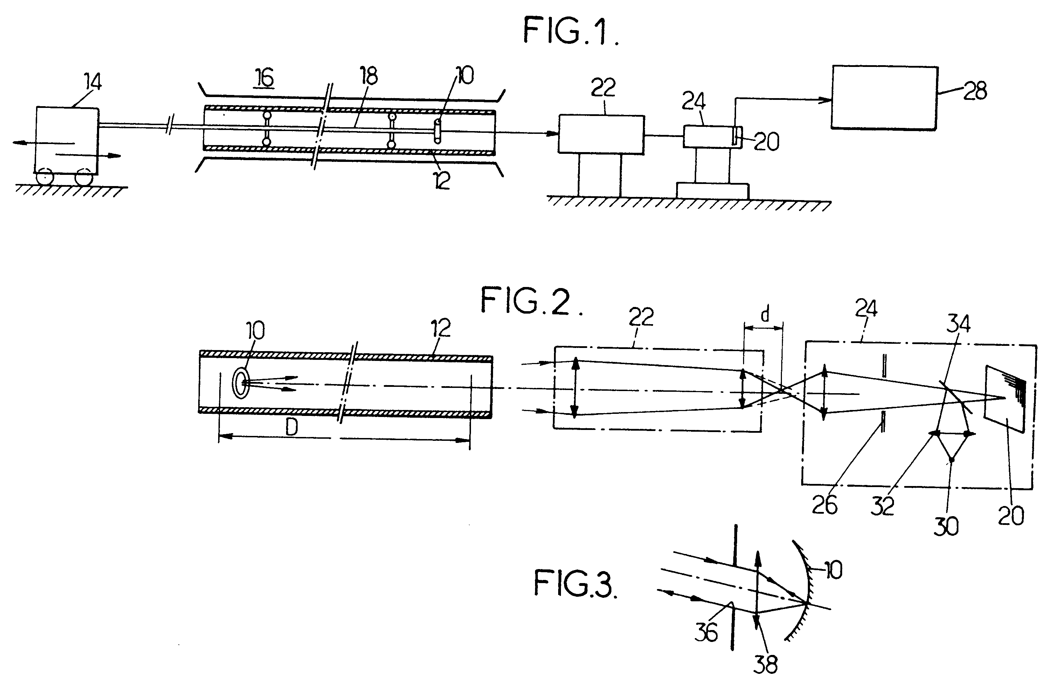

Une solution généralement plus avantageuse consiste à envoyer un faisceau d'éclairage du motif à l'aide du système optique lui-même. Dans le cas illustré sur les figures 2 et 3, l'énergie lumineuse est fournie par une source 30 focalisée par une lentille 32. Ce faisceau est renvoyé vers l'objet par une lame semi-réfléchissante ou un cube séparateur 34.

Dans ce cas, le motif doit être rendu réfléchissant dans la direction du faisceau qu'il reçoit, et cela quelle que soit l'orientation de l'objet dans le domaine d'inclinaison possible, généralement de quelques milli-radians dans chaque direction. Ce résultat peut être obtenu en utilisant un dispositif catadioptrique. Un tel dispositif est montré en figure 3. Le motif proprement dit est constitué par un trou 36 placé devant une lentille 38 de courte distance focale (de quelques millimètres à quelques centimètres). Le faisceau incident, pratiquement parallèle, est focalisé par la lentille 38 sur un miroir sphérique 40 dont le centre de courbure est placé au centre du trou. Aussi longtemps que le système optique travaille dans l'approximation de Gauss, ce qui est le cas avec des angles par rapport à l'axe ne dépassant pas 10 milli-radians environ, tout rayon incident est renvoyé dans la direction d'incidence.

Dans la pratique, l'ensemble 22 comportera des prismes ou miroirs de repliement, afin que sa longueur géométrique soit notablement inférieure à sa longueur optique. Par exemple, dans le cas d'une distance D de 12m, l'ensemble 22 aura une optique de focale au moins égale à 1200mm environ pour que l'image intermédiaire soit accessible. Une distance focale supérieure peut être avantageuse, afin que l'image intermédiaire soit suffisamment écartée des différents dioptres pour que des micro-défauts de surface n'aient pas d'effet notable. L'image intermédiaire sera, dans un exemple représentatif, à une distance d du dernier dioptre de l'ensemble 22 qui varie entre 35 et 155mm. La pupille constituée par le diaphragme 26 pourra être constituée par un trou de 350 µm de diamètre. Un tel diaphragme correspond à une image de pupille de 30mm à l'entrée du tube de mesure lorsque l'objet 10 se trouve situé à l'autre extrémité du tube 12. Le détecteur matriciel pourra être constitué par une matrice CCD de 6x8mm. Le viseur pourra être monté sur une platine portée par le socle par l'intermédiaire de roulements à très faible bruit.

L'image du motif lumineux recule en même temps que le motif lumineux lorsque ce dernier se rapproche de l'entrée du tube et que le viseur recule. L'ouverture numérique reste ainsi constante, ainsi que le diamètre de la tache de diffraction et l'image géométrique du motif.

La lentille 32 du sous-ensemble d'éclairage peut avoir une focale de 10mm et recevoir la lumière de la tranche terminale d'une fibre optique de 100 µm de diamètre en silice. La face de sortie de la fibre d'éclairement constituant la source 30 est avantageusement conjuguée avec la pupille du système par la lentille 32 de façon à éliminer les effets et les défauts de surface de la tranche terminale de la fibre. On peut utiliser, comme source lumineuse 30, une diode laser continue dans le visible, mais en lumière incohérente. Dans certains cas cette source pourra être placée sur l'objet lui-même.

Il n'est pas nécessaire de décrire ici la constitution du circuit ou calculateur d'analyse 28, qui peut être d'un genre connu.

Dans certains cas, et notamment lorsqu'il existe des différences de température importantes dans l'environnement du dispositif, des turbulences de l'air peuvent se produire. Pour éviter qu'elles n'aient une incidence sur la mesure, le trajet optique dans le tube peut être isolé par des fenêtres, et par exemple être mis sous atmosphère d'hélium. Dans ce cas une fenêtre transparente est placée à la sortie du tube. Pour limiter le décalage transversal introduit par l'attaque de cette fenêtre sous incidence oblique, on choisira alors une lame en un matériau d'indice le plus faible possible, par exemple en silice, d'épaisseur faible, ne dépassant pas quelques millimètres.

## Revendications

1. Dispositif optique de mesure de l'écart transversal, par rapport à un axe optique, d'un objet (10) déplaçable le long de l'axe sur une longueur supérieure de plusieurs ordres de grandeur à la dimension transversale maximale acceptable pour la pupille du dispositif, caractérisé en ce qu'il comprend : un motif lumineux placé sur l'objet et, dans cet ordre, le long de l'axe optique, un système dioptrique afocal fixe (22) de grandissement axial inférieur à 1/10, un viseur optique (24) de longueur focale fixe, déplaçable le long de l'axe optique, destiné à pointer l'image fournie par le système afocal, ayant un grandissement supérieur à l'unité, et un détecteur matriciel (20) fixe par rapport à l'optique du viseur, relié à des moyens (28) de détermination du barycentre de l'image formée sur le détecteur et de l'écart de ce barycentre par rapport à l'axe optique.

2. Dispositif selon la revendication 1, caractérisé en ce que le viseur (24) a un grandissement inverse de celui du système dioptrique afocal (22).

3. Dispositif selon la revendication 1 ou 2, caractérisé en ce que le système dioptrique afocal (22) comporte des prismes ou miroirs de repliement du trajet lumineux.

4. Dispositif selon la revendication 1, 2 ou 3 caractérisé en ce que le motif lumineux est constitué par une mire éclairée depuis l'extérieur.

5. Dispositif selon la revendication 3, caractérisé en ce que le motif lumineux comprend un trou (36) placé devant une lentille (38) de courte distance focale, de focalisation d'un faisceau incident dirigé le long du tube sur un miroir sphérique (40) dont le centre de courbure est placé au centre du trou.

6. Dispositif selon l'une quelconque des revendications précédentes, caractérisé en ce que le trajet optique dans le tube est isolé par au moins une fenêtre transparente placée à la sortie du tube.
